# EUROPÄISCHE PATENTANMELDUNG

(11) **EP 1 950 481 A2**
(43) Veröffentlichungstag der Anmeldung: **30.07.2008**
(21) Anmeldenummer: 08001580.3
(22) Anmeldetag: 29.01.2008
(51) Int. Cl.: F16L 11/08, F16L 11/12, F16L 33/30

(54) **Silikonschlauch**

(30) Priorität: 29.01.2007 DE 102007005195
(71) Anmelder: Tecno Plast, 40549 Düsseldorf (DE)
(72) Erfinder: Schnitzler, Albert, 52379 Langerwehe (DE); Mayer, Lorenz, 45476 Mülheim (DE)
(74) Vertreter: Gerber, Wolfram

(57) **Zusammenfassung**

Die Erfindung betrifft einen Silikonschlauch mit einer inneren und einer äußeren Schicht, zwischen denen ein Geflecht angeordnet ist, wobei das Geflecht einen negativen Geflechtswinkel aufweist, derart, dass der Schlauch bei Druck im Inneren des Schlauches (S) länger wird.

## Beschreibung

Die vorliegende Erfindung betrifft einen Silikonschlauch mit einer inneren und einer äußeren Schicht, zwischen denen ein Geflecht angeordnet ist sowie eine wiederverwendbare Kupplung zum Verbinden eines Schlauchendes des Silikonschlauches.

Silikonschläuche, die mit einem Geflecht verstärkt sind, werden in einem Bereich von bis zu 10 bar eingesetzt. Das Geflecht weist einen neutralen Geflechtswinkel auf, da die Länge des Schlauches unter Druckbelastung annähernd konstant bleiben soll. Derartige Silikonschläuche werden mittels Schlauchanschlüssen mit anderen Schläuchen oder Armaturen verbunden. Die Schlauchanschlüsse weisen Hülsen auf, die in einem ersten Montageschritt auf das Schlauchende mit ihrem Innengewinde aufgeschraubt werden. Danach wird dass Schlauchende auf den Stutzen eines Anschlussstücks aufgeschoben, wobei die Oberfläche des Stutzens Riffelungen aufweisen kann. Beim Aufschieben des Schlauchendes wirkt die Hülse mit einem weiteren Innengewinde mit einem Außengewinde des Stutzens zusammen, wobei durch das Aufschrauben der Hülse auf das Anschlussstück das Schlauchende fest mit dem Anschlussstück verbunden wird. Oftmals wird zwischen Hülse und Anschlussstück eine Ringdichtung eingebracht. Bei der Montage dieser Schlauchanschlüsse besteht die Gefahr, dass der Schlauch durch das Aufschrauben und damit einhergehenden Einschneiden des Gewindes in die äußere Schicht des Silikonschlauches unbemerkt zerstört wird, so dass der Schlauch oft unmittelbar hinter oder im Bereich des Anschlussstücks platzen kann.

Aufgabe der Erfindung ist es, einen Silikonschlauch und einen passenden Schlauchanschluss bereit zu stellen, wobei der Silikonschlauch und der Schlauchanschluss einfach in ihrem Aufbau, und die Montage einfach und schnell möglich sein soll.

Diese Aufgabe wird erfindungsgemäß mittels eines Silikonschlauchs mit den Merkmalen des Anspruchs 1 gelöst. Die Erfindung überwindet dabei das bislang herrschende Vorurteil, dass bei gewebeverstärkten Silikonschläuchen das verwendete Geflecht keinen negativen Geflechtswinkel aufweisen darf, da hierdurch eine Längenänderung des Schlauches unter Druck erfolgt. Die Erfindung macht sich dieses Eigenschaft gerade zu Nutze, damit sich durch die Längenänderung des Schlauches auch dessen Innendurchmesser unter Druck verringert, so dass sich das Schlauchende fest am Stutzen des Schlauchanschlusses verkrallt. Dies erfolgt dadurch, dass die einzelnen Fasern bzw. Fäden des Geflechts sich über die gesamte Länge des Schlauches erstrecken und somit auch im Schlauchende, welches dem Betriebsdruck nicht unmittelbar ausgesetzt ist, eine Längen- und damit einhergehend auch eine Änderung des Innendurchmessers erfolgt.

Der Geflechtswinkel beträgt vorteilhaft 58° bis 60°. Dieser Winkelbereich bewirkt eine hinreichende Verringerung des Innendurchmessers, so dass der erfindungsgemäße Silikonschlauch bei einem Betriebsdruck von 2 bis 5 bar sicher an dem erfindungsgemäßen Schlauchanschluss festkrallt.

Damit eine gute Verbindung der äußeren und inneren Schicht des Silikonschlauches realisiert werden kann, ist es erforderlich, dass das verwendete Geflecht genügend große Zwischenräume zwischen den einzelnen Fasern bzw. Fäden aufweist, so dass eine hinreichend gute Vulkanisierung zwischen den Schichten durch diese Zwischenräume erfolgen kann.

Schläuche, deren Geflecht einen negativen Geflechtswinkel, dass heißt einen Geflechtswinkel von größer als 54° aufweisen, sind meist Kautschukschläuche. Diese sind jedoch nicht für alle Einsatzbereiche, wie z.B. den medizinischen Bereich und den Lebensmittelbereich, verwendbar.

Der erfindungsgemäße Schlauchanschluss weist vorteilhaft keine Gewinde auf, die sich in den Silikonschlauch einschneiden können. Hierdurch wird vorteilhaft ein Einschneiden und damit einhergehend ein Einreißen und Aufplatzen des Schlauches unter Betriebsdruck vermieden.

Der erfindungsgemäße Schlauchanschluss weist vorteilhaft ein Anschlussstück auf, an dem ein Stutzen mit Rücksprüngen angeordnet ist. Die Rücksprünge können vorteilhaft durch ein Sägezahnprofil gebildet sein, wobei jeweils zwischen zwei benachbarten Zähnen ein genügend großer Zwischenraum bzw. Kammer vorhanden sein muss, in die die innere Schicht des Silikonschlauches eingreifen kann.

Nur zum Zwecke der Optik und der leichteren Reinigung kann über das Schlauchende eine Hülse aufgeschoben werden, die am Anschlussstück formschlüssig mit ihrer einen Stirnseite anliegt oder mit der Stirnseite - bei einer bevorzugten Ausführungsform - in einer umlaufenden Nut des Anschlussstücks einliegt.

Das freie Ende des Stutzens des Anschlussstücks weist vorteilhaft einen zylindrischen Abschnitt auf, dessen Innendurchmesser sich zur Öffnung des Stutzens hin vergrößert, so dass sich ein kontinuierlicher Übergang des Innendurchmessers vom Stutzen hin zum Schlauch ergibt.

Der erfindungsgemäße Silikonschlauch muss zur vollständigen Montage lediglich über den Stutzen des erfindungsgemäßen Schlauchanschlusses übergeschoben werden. Hierdurch ist der Einsatz von mit Gewinden versehenen Teilen vorteilhaft nicht notwendig. Eine Beschädigung des Silikonschlauches ist somit nahezu ausgeschlossen. Zusätzliche Werkzeuge zur Montage werden vorteilhaft nicht benötigt.

Das Demontieren des Schlauches von dem Anschlussstück kann z.B. mittels einer aus der DE 10 2006 001 326.3 bekannten Abziehvorrichtung erfolgen.

Nachfolgend wird eine mögliche Ausführungsform des erfindungsgemäßen Schlauchanschlusses anhand von Zeichnungen näher erläutert.

Es zeigen:
- Fig. 1:: Teilgeschnittene Darstellung eines Anschlussstücks des Schlauchanschlusses;
- Fig. 2:: Teilausschnitt A von Fig. 1;
- Fig. 3:: Teilausschnitt B von Fig. 1;
- Fig. 4:: Teilausschnitt C von Fig. 1;
- Fig. 5:: auf Schlauchanschluss montierter erfindungsgemäßer Silikonschlauch.

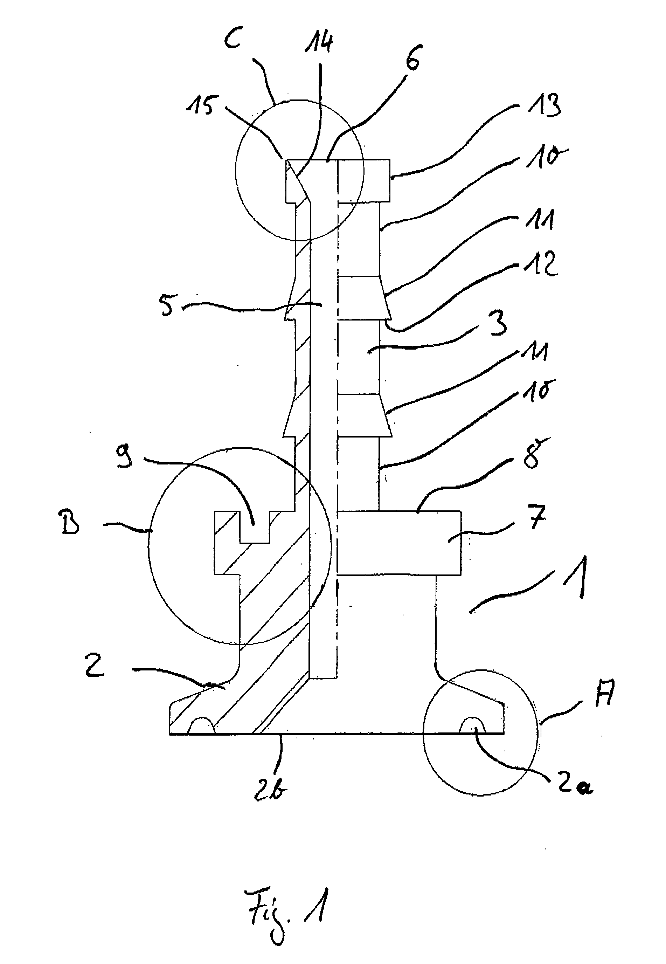

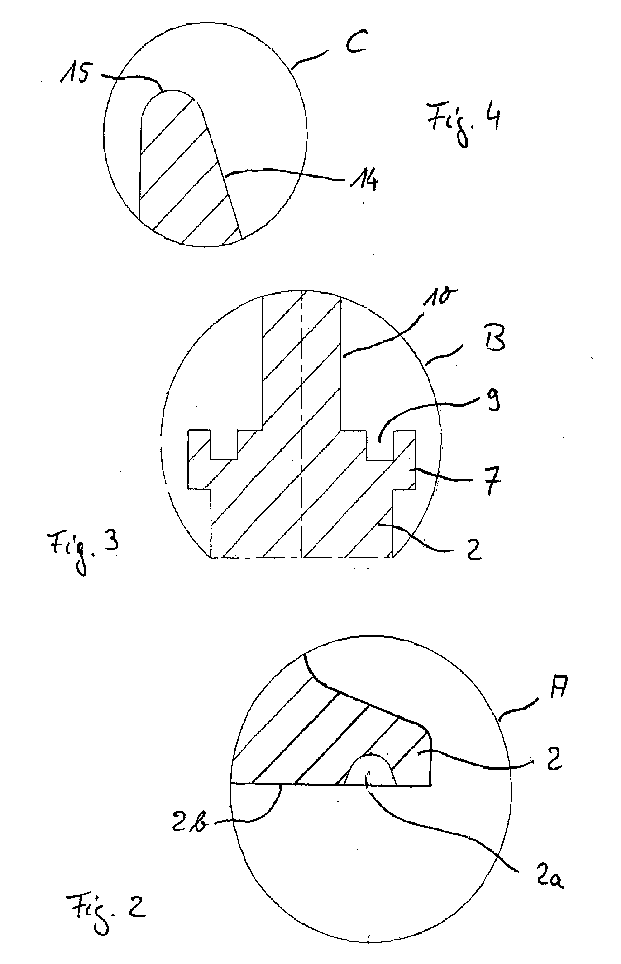

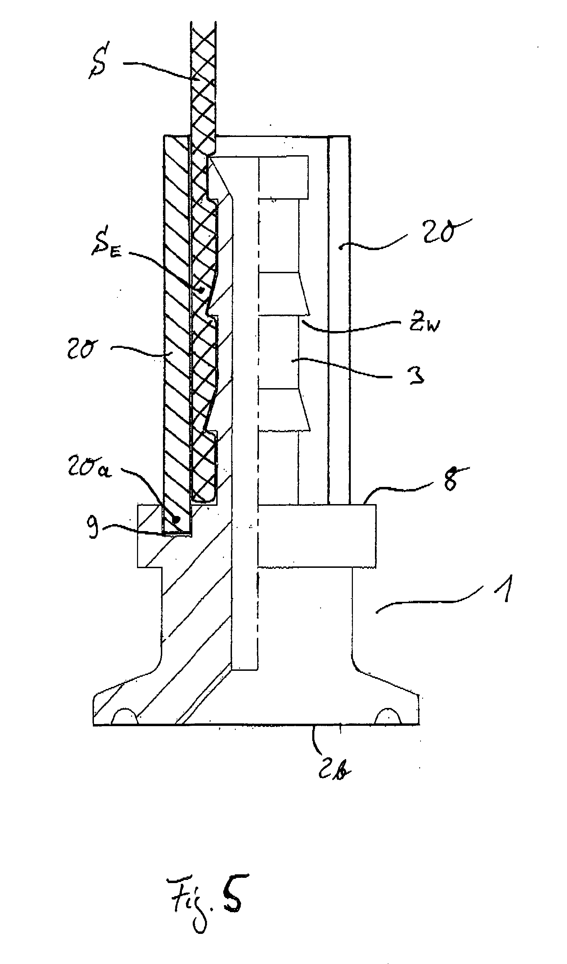

Die Fig. 1 zeigt das Anschlussstück 1 des Schlauchanschlusses, bestehend aus Kupplungsbereich 2 und Stutzen 3. Der Kupplungsbereich weist eine Flanschfläche 2b mit einer umlaufenden Nut 2a für eine Dichtung auf. Zudem weist der Kupplungsbereich 2b eine Anlagefläche 8 auf, die ebenfalls eine umlaufende Nut 9 aufweist, in die eine Hülse 20 mit ihrer einen Stirnseite 20a im montierten Zustand einliegt (Fig. 5). An den Kupplungsbereich 7 grenzt der Stutzen 3 an, welcher rotationssymmetrisch ist und umlaufende Vorsprünge in Form von Sägezähnen 11 aufweist. Die Sägezähne 11 haben senkrechte Flanken 12, welche als Rücksprungflanken dienen, die ein Abrutschen des montierten Silikonschlauches S (Fig. 5) verhindern. Die Rücksprunghöhe der Sägezähne 11 ist an die Wandstärke des Silikonschlauches und den Betriebsdruck anzupassen. Das freie Ende 15 des Stutzens 3 weist einen zylindrischen Bereich 13 auf. Der Innendurchmesser der Durchgangsbohrung 5 des Anschlussstücks 1 vergrößert sich bis hin zur Öffnung 6, so dass sich ein glatter Übergang vom Stutzen 3 zum Silikonschlauch S ergibt, wodurch sich weniger Schmutz in diesem Bereich ansammeln kann. Zwischen den Sägezähnen 11 sind zylindrische Abschnitte angeordnet, die zusammen mit den Sägezähnen Kammern ZW bilden, in die das Material des sich zusammenziehenden Schlauchendes ausweichen kann. Die Fig. 2 bis 4 zeigen vergrößerte Details A bis C der Figur 1.

Die Figur 5 zeigt den montierten Schlauchanschluss mit einem Teil des Silikonschlauches S. Das Schlauchende S_{E} ist zwischen der Hülse 20 und dem Stutzen 3 angeordnet, wobei zur Montage zuerst die Hülse über das Schlauchende S_{E} soweit übergeschoben wird, dass das Schlauchende S_{E} ohne die Hülse 20 über den Stutzen 3 geschoben werden kann. Der Innendurchmesser des Silikonschlauches ist kleiner oder gleich dem Außendurchmesser des Stutzens 3. Hierdurch sind die Kräfte, die für das Aufschieben benötigt werden relativ gering, so dass der Silikonschlauch S nicht sonderlich stark strapaziert wird. Anschließend wird die Hülse in ihre in Figur 5 dargestellte Position über den Stutzen aufgeschoben und liegt am Ende mit ihrer Stirnseite 20a in der umlaufenden Nut 9 des Anschlussstückes 1 ein.

## Patentansprüche

1. Silikonschlauch mit einer inneren und einer äußeren Schicht, zwischen denen ein Geflecht angeordnet ist, **dadurch gekennzeichnet, dass** das Geflecht einen negativen Geflechtswinkel aufweist, derart, dass der Schlauch bei Druck im Inneren des Schlauches (S) länger wird.

2. Silikonschlauch nach Anspruch 1, **dadurch gekennzeichnet, dass** der Geflechtswinkel im Bereich von 54 bis 65 Grad (360° ergeben einen Vollkreis) ist, insbesondere im Bereich von 58 bis 60 Grad.

3. Silikonschlauch nach Anspruch 1 oder 2, **dadurch gekennzeichnet, dass** das Geflecht fensterartige Zwischenräume aufweist, die eine hinreichende Vulkanisierung der inneren und der äußeren Schicht erlauben.

4. Silikonschlauch nach einem der Ansprüche 1 bis 3, **dadurch gekennzeichnet, dass** sich das Geflecht über die gesamte Länge des Schlauches erstreckt.

5. Silikonschlauch nach einem der vorhergehenden Ansprüche, **dadurch gekennzeichnet, dass** das Geflecht aus gekreuzten Fäden und/oder Seilen besteht, die um den Innenraum des Schlauches gewunden sind und sich jeweils von einem Ende bis zum anderen Ende des Schlauches durchgehend erstrecken.

6. Wiederverwendbarer Schlauchanschluss zum Verbinden eines Schlauchendes eines Silikonschlauches nach einem der vorhergehenden Ansprüche, wobei der Schlauchanschluss ein Anschlussstück (1) aufweist, das einen Kupplungsbereich (2) und einen daran angeordneten Stutzen (3) hat, wobei der Stutzen (3) mindestens einen umlaufenden Rücksprung (11,12) hat, dessen Rücksprungflanke (12) jeweils dem Kupplungsbereich (2) zugewandt ist, und jeder Rücksprung (11, 12) eine Rücksprunghöhe aufweist, die kleiner als die Wandstärke des Silikonschlauches (S) ist, **dadurch gekennzeichnet, dass** der Stutzen (3) ein im Querschnitt sägezahnförmiges Profil hat, wobei zwischen der schrägen Flanke (11) eines Sägezahns und der Rücksprungflanke (12) eines benachbarten Sägezahns jeweils ein zylindrischer Abschnitt (10) mit konstantem Außendurchmesser angeordnet ist, wobei die Rücksprunghöhe dem Schlauchdurchmesser und dessen Wandstärke derart angepasst ist, dass bei einem Druck innerhalb des Silikonschlauches sich zumindest der Innendurchmesser des Silikonschlauches aufgrund des negativen Geflechtswinkels auch im Bereich des über den Stutzen (3) gezogenen Silikonschlauchendes verringert und sich das Schlauchende (S_{E}) in den Rücksprüngen festkrallt.

7. Schlauchanschluss nach Anspruch 7, **dadurch gekennzeichnet, dass** das Anschlussstück (1) einen Kragen (7) aufweist, der an seiner dem Stutzen (3) zugewandten Seite eine umlaufende Nut (9) aufweist.

8. Schlauchanschluss nach Anspruch 7 oder 8, **dadurch gekennzeichnet, dass** der Schlauchanschluss eine Hülse (20) aufweist, die über das Schlauchende (S_{E}) aufschiebbar ist, wobei der Innendurchmesser der Hülse gleich groß oder geringfügig kleiner ist als der Außendurchmesser des Silikonschlauches.

9. Schlauchanschluss nach Anspruch 9, **dadurch gekennzeichnet, dass** die Hülse (20) mit ihrer Stirnseite (20a) in die umlaufende Nut (9) des Anschlussstückes (1) einschiebbar ist, wobei insbesondere die Wandstärke der Hülse der Breite der Nut entspricht.
